**Europäisches Patentamt**

**European Patent Office**

**Office européen des brevets**

(11) Numéro de publication: **0 054 490**

**A1**

(12) **DEMANDE DE BREVET EUROPEEN**

(21) Numéro de dépôt: **81401984.0**

(22) Date de dépôt: **11.12.81**

(51) Int. Cl.³: **G 06 F 13/00**

(30) Priorité: **12.12.80 FR 8026393**

(43) Date de publication de la demande:
**23.06.82 Bulletin 82/25**

(84) Etats contractants désignés:
**DE FR GB IT NL**

(71) Demandeur: **TEXAS INSTRUMENTS FRANCE Société dite:**

**F-06270 Villeneuve Loubet(FR)**

(84) Etats contractants désignés:
**FR**

(71) Demandeur: **TEXAS INSTRUMENTS INCORPORATED**
**13500 North Central Expressway**
**Dallas Texas 75265(US)**

(84) Etats contractants désignés:
**DE GB IT NL**

(72) Inventeur: **Chauvel, Gérard**
**10 Avenue des Chênes**
**F-06800 Cagnes Sur Mer(FR)**

(74) Mandataire: **Moncheny, Michel et al,**
**c/o Cabinet Lavoix 2 Place d'Estienne d'Orves**
**F-75441 Paris Cedex 09(FR)**

(54) Procédé et dispositif pour permettre l'échange d'information entre des systèmes de traitement d'information à vitesses de traitement différentes.

(57) Dans ce procédé et ce dispositif, une mémoire vive (4) reçoit des données d'un système émetteur (2) et un système récepteur (1) plus lent que le système émetteur extrait ces données de la mémoire à son propre rythme. Chacun des systèmes est associé à un pointeur d'adresses (5,6) qui sont incrémentés par les signaux d'horloge des systèmes émetteur et récepteur. Un circuit (7) est prévu pour signaler l'égalité entre les contenus des deux pointeurs au système récepteur pour qu'il puisse éviter de traiter des données introduites dans la mémoire à des positions d'adresse non encore prises en compte par le système récepteur (1).

Application dans un dispositif d'affichage de télétexte.

FIG.1

Procédé et dispositif pour permettre l'échange
d'information entre des systèmes de traitement
d'information à vitesses de traitement différentes.-

La présente invention concerne l'échange
d'information entre des systèmes de traitement à vitesses de traitement différentes.

En informatique, on rencontre souvent des difficultés d'adaptation de divers systèmes de traitement d'information tels qu'une unité centrale et un terminal en raison des vitesses différentes auxquelles ils peuvent gérer les données devant être transférées de l'un à l'autre et inversement.

Il est connu d'utiliser dans ce but des piles de registres utilisées en tant que tampon entre les deux systèmes de traitement et de faire fonctionner la pile selon le processus " premier entré, premier sorti " (FIFO). Cependant, de telles piles sont d'un prix de revient élevé, ont une faible capacité ( et ne peuvent donc être utilisées que si les vitesses ne sont pas trop différentes). Par ailleurs, leur taille est fixée à la fabrication et ne peut être modifiée dynamiquement en fonction des besoins.

L'invention a pour but de fournir un procédé et un dispositif permettant l'échange d'information entre deux systèmes informatiques à vitesses de traitement différentes ne présentant aucun des inconvénients des piles du type FIFO de la technique antérieure.

L'invention a donc pour objet un procédé permettant l'échange d'information entre deux systèmes à vitesses de traitement d'information différentes, l'un des systèmes étant émetteur et l'autre récepteur, caractérisé en ce qu'il consiste à stocker successivement des groupes de données composant l'information envoyée par le système émetteur dans une mémoire vive sous la commande d'un premier pointeur d'adresses capable d'adresser successivement toutes les positions de la mémoire à la vitesse du système émetteur, à extraire successivement les groupes d'information ainsi stockés de la mémoire sous la

2

commande d'un second pointeur d'adresses capable également d'adresser successivement toutes les positions de la mémoire à la vitesse du système récepteur, à comparer constamment les contenus des pointeurs et à engendrer un signal en cas d'égalité de ces contenus pour avertir le système récepteur que la mémoire est vide.

Grâce à ces caractéristiques, il est tout d'abord possible d'utiliser des circuits standards disponibles dans le commerce, la taille de la mémoire pouvant être choisie en fonction de la vitesse relative de traitement des deux systèmes. Ainsi, dans un ensemble de traitement complexe comportant une mémoire composite dont différentes zones sont affectées au stockage d'information de natures diverses, la taille de la zone utilisée pour la mémoire vive peut être déterminée simplement par des adresses chargées dans les pointeurs d'adresses, ce qui rend possible une adaptation pour chaque cas d'utilisation, voire une adaptation dynamique de la taille de la mémoire au cours du fonctionnement de l'ensemble.

Au contraire, dans la technique antérieure où on employait des circuits tampon " premier entré, premier sorti " une telle adaptation ne serait pas possible, car la taille d'un tel circuit ne serait pas modifiable et devrait être déterminée au niveau de la fabrication du circuit pour chaque cas d'utilisation précis.

L'invention a également pour objet un dispositif pour la mise en oeuvre du procédé tel que défini ci-dessus ainsi qu'une application du procédé et du dispositif dans un dispositif d'affichage de télétexte.

D'autres caractéristiques et avantages de l'invention apparaîtront au cours de la description qui va suivre, donnée uniquement à titre d'exemple et faite en se référant aux dessins annexés, sur lesquels :

3

    - la Fig.1 représente un schéma de principe du dispositif suivant l'invention;

    - la Fig.2 en est un schéma plus détaillé;

    - les Fig.3 et 4 sont des diagrammes représentant les relations temporelles qui existent entre divers signaux apparaissant dans le dispositif représenté sur la Fig.2;

    - la Fig.5 est un schéma très simplifié d'un dispositif d'affichage de télétexte dans lequel est utilisé le dispositif suivant l'invention.

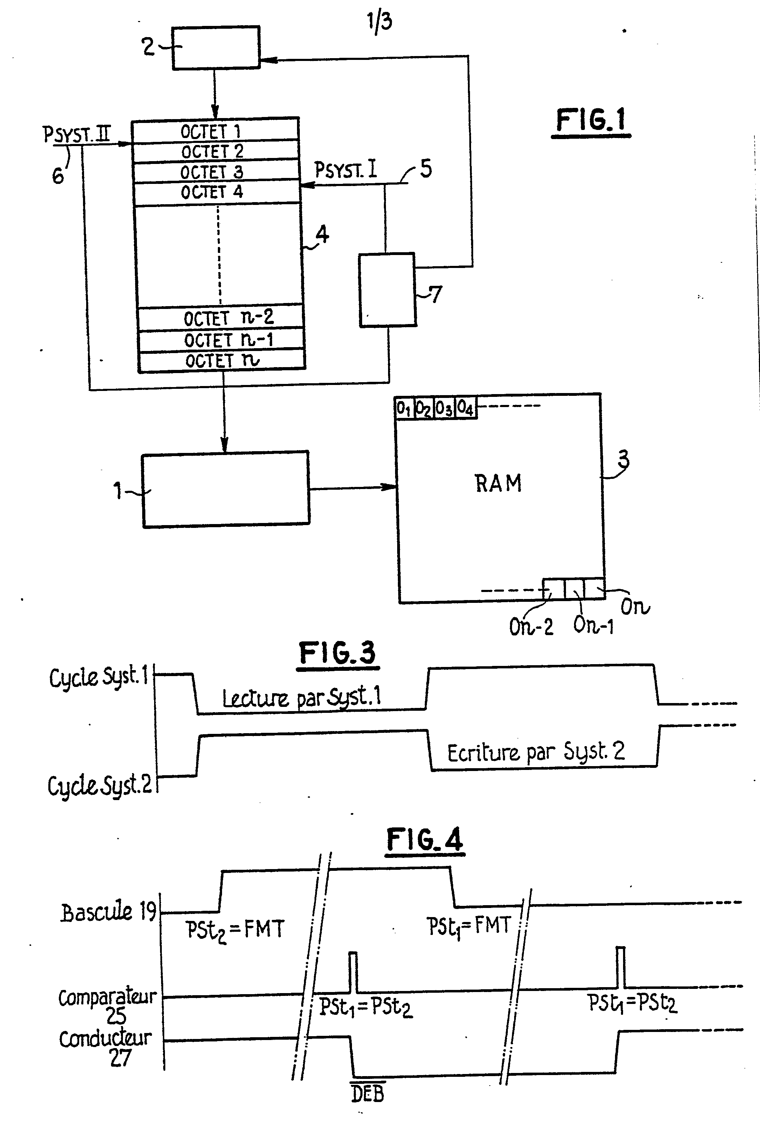

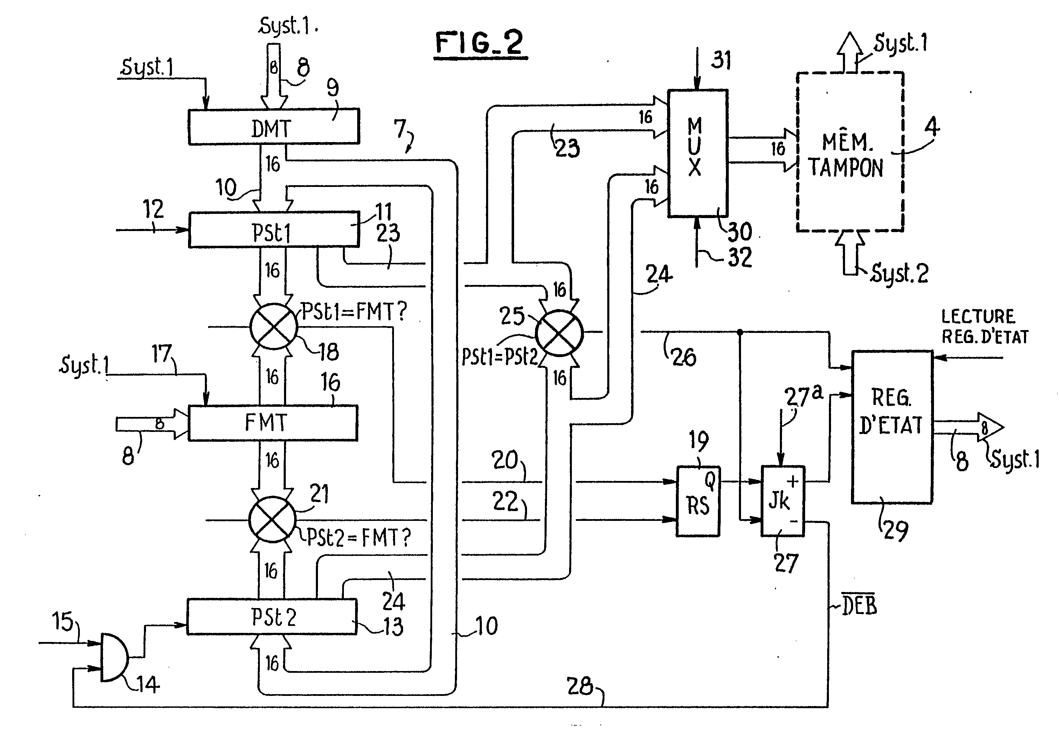

    On se réfèrera tout d'abord à la Fig.1 qui représente un schéma très simplifié d'un dispositif permettant l'échange d'information entre un premier système 1 de traitement d'information et un second système 2 de traitement d'information, ce dernier devant par exemple stocker des données dans une mémoire RAM3 à accès aléatoire. Dans l'exemple décrit ici, on suppose que le système 2 est un émetteur ayant une vitesse de traitement nettement supérieure à celle du système récepteur 1 ou en d'autres termes que le système 2 fournit des données beaucoup plus rapidement que le système 1 peut en stocker dans la mémoire 3.

    Suivant l'invention, entre les systèmes 1 et 2, est connectée une mémoire vive 4 constituant un tampon dont les positions sont successivement adressées par deux pointeurs 5 et 6 constitués par des registres qui sont incrémentés d'une unité chaque fois que le système 1 ou 2 auquel ils sont respectivement associés demande un transfert de données vers la mémoire 4 ou en dehors de celle-ci.

    Dans l'exemple, on suppose que chaque position de la mémoire tampon 4 peut contenir un octet, la mémoire ayant une capacité totale de $n$ positions.

    Par ailleurs, lorsqu'un pointeur contient l'adresse de la dernière position de la mémoire, son système de traitement associé le recharge avec l'adresse de

4

la première position pour que toutes les positions puissent de nouveau et successivement être adressées.

Etant donné que les vitesses de traitement des deux systèmes sont différentes, les pointeurs 5 et 6 ne sont pas incrémentés au même rythme de sorte que celui associé au système 2 (ayant dans l'exemple la vitesse la plus grande), peut dans certaines conditions rattraper le contenu d'adresse de l'autre pointeur.

Les pointeurs sont donc reliés à un circuit de contrôle 7 qui permet d'engendrer 1) un signal d'égalité $PSt_1 = PSt_2$ lorsque les adresses contenues dans les pointeurs sont égales; 2) un signal de débordement DEB lorsque cette égalité intervient après que le pointeur du système 2 a un tour d'avance sur le pointeur du système 1.

Le second signal est obtenu en exécutant une opération logique ET sur le premier signal et sur un signal $PSt_2 = FMT$ engendré lorsque le pointeur 6 atteint la dernière position de la mémoire tampon 4.

Le circuit de contrôle 7 permet ainsi d'éviter qu'en cas d'égalité des contenus des deux pointeurs, le flot de données introduit dans la mémoire 4 par le système de traitement 2 ne soit écrasé par les données présentes dans celle-ci, mais pas encore extraites par le système récepteur 1.

Il est à noter que dans certains cas, il peut suffire de n'engendrer que le premier signal pour signaler que les contenus des deux pointeurs sont égaux, par exemple si on peut disposer d'une capacité importante de mémoire pour la mémoire tampon ou si la vitesse relative de traitement des données par les systèmes 1 et 2 est faible. Dans ces conditions, la probabilité qu'il y ait égalité $PSt_1 = PSt_2$ avec un tour d'avance sera faible et il n'y a donc pas de risque de perte des données stockées dans la mémoire tampon. Par contre, si on ne dispose que d'une faible taille de mémoire et/ou si la vitesse relative

5

est élevée, il peut être très utile de prévoir la production du signal DEB qui permet par l'intermédiaire du circuit de contrôle d'arrêter momentanément l'introduction des données par le système émetteur 2 dans la mémoire jusqu'à ce que le système récepteur 1 ait eu le temps de vider celle-ci de son contenu.

On va maintenant examiner la Fig.2 qui représente plus en détail l'agencement du circuit de contrôle 7 de la Fig.1.

Le bus 8 à huit bits du système de traitement 1 est raccordé à un registre 9 permettant de stocker l'adresse de début de la mémoire tampon 4, c'est-à-dire celle de la première position de celle-ci. Cette adresse peut avoir une valeur numérique quelconque par exemple, pour désigner une position de mémoire située dans une mémoire plus complexe dont la mémoire tampon 4 ne forme qu'une zone. Par exemple, en se reportant à la Fig.1, les mémoires 3 et 4 peuvent être réalisées sur une même pastilles semi-conductrice. Il est à noter également que la valeur de l'adresse de début peut varier au cours du fonctionnement par une programmation appropriée de sorte que la taille de la mémoire 4 peut varier dynamiquement.

L'adresse de début de mémoire tampon (DMT) est formée lors de l'initialisation du transfert des données par deux signaux de chargement, de sorte que l'adresse contenue dans le registre 9 est sur seize bits au cours du fonctionnement. La sortie du registre DMT 9 est raccordée à un bus 10 qui est connecté tout d'abord à un compteur d'adresses 11 pour transférer au début du fonctionnement, le contenu du registre DMT 9 dans ce compteur. Ce dernier qui est incrémenté par l'horloge du système récepteur 1 sur le conducteur 12 constitue le pointeur $PSt_1$ 5 de la Fig.1.

Le bus 10 est également relié à un comp-

ε

teur d'adresses 13 chargé, au début du fonctionnement, avec l'adresse contenue dans le registre DMT 9. Le compteur 13 constitue le pointeur $PSt_2$ 6 de la Fig.1 et est incrémenté par l'horloge du système émetteur 2 à travers une porte ET 14, dont l'une des entrées est reliée à un conducteur d'horloge 15 du système émetteur 2.

Au début du fonctionnement, une adresse de fin de mémoire tampon (FMT) est chargée dans un registre FMT 16 par l'intermédiaire du bus 8 provenant du système récepteur 1. Cette opération se fait par un double signal de chargement provenant également de ce système par le conducteur 17.

Un premier comparateur 18 est relié de manière à pouvoir comparer le contenu du compteur 11 et du registre 16 ($PSt_1$ = FMT ? ). Sa sortie est reliée à une bascule RS 19 par l'intermédiaire d'un conducteur 20.

Un second comparateur 21 est relié entre le registre FMT 16 et le compteur $PSt_2$ 13 pour comparer le contenu de ces deux éléments ($PSt_2$ = FMT ? ). Sa sortie est reliée à l'autre entrée de la bascule RS 19 par un conducteur 22.

Par conséquent, cette dernière est placée dans un premier état en cas d'égalité entre $PSt_1$ et FMT et dans l'état opposé lorsque $PSt_2$ = FMT.

Les compteurs 11 et 13 sont également reliés par des bus à seize bits 23 et 24 à un troisième comparateur 25 destiné à constater l'égalité entre les contenus des deux compteurs ($PSt_1$ = $PSt_2$ ?). Sa sortie est reliée par un conducteur 26 à une bascule JK 27 dont l'autre entrée est reliée à la sortie Q de la bascule RS.

L'une des sorties de la bascule JK 27 est reliée par un conducteur 28 à l'une des entrées de la porte ET 14, tandis que son entrée complémentaire est reliée à un registre d'état 29 appartenant au système récepteur 1 auquel il est relié par le bus 8. Le registre d'état reçoit également l'information d'égalité $PSt_1$ = $PSt_2$ appa-

raissant sur le conducteur 26.

La bascule RS 19 et la bascule JK 27 effectuent ensemble une opération logique ET sur les signaux $PSt_1 = PSt_2$ et $PSt_2 = FMT$ pour signaler un risque de débordement ou d'écrasement des données introduites dans la mémoire tampon 4 par le système émetteur 2.

Les bus d'adresses 23 et 24 sont reliés aux entrées d'un multiplexeur d'adresses 30 dont la sortie est reliée à l'entrée d'adresse de mémoire tampon 4. Ce multiplexeur a pour rôle de répartir dans le temps l'adressage de la mémoire par les bus d'adresses 22 et 23 selon un cycle alterné, par exemple (Fig.3). Le multiplexeur comporte donc deux entrées de commande 31,32 excitées en alternance par des signaux engendrés en fonction des cycles des systèmes de traitement 1 et 2.

Le fonctionnement du dispositif suivant l'invention est le suivant.

Le dispositif est initialisé par le chargement dans les registres 9 et 16 des valeurs d'adresses DMT et FMT, respectivement sous la commande du système récepteur 1.

La sortie du comparateur 25 indique l'état $PSt_1 = PSt_2$, elle reste constante tant que des données ne sont pas chargées dans la mémoire 4.

Les données issues du système 2 sont chargées dans la mémoire 4 en utilisant les adresses du compteur $PSt_2$ lui-même incrémenté à l'aide du signal d'horloge du système émetteur 2. La porte ET 14 est passante par l'intermédiaire de signal $\overline{DEB}$ qui lui parvient par le conducteur 28.

L'écriture en mémoire a lieu en fonction de l'état du multiplexeur 30, c'est-à-dire lorsque celui-ci est branché au bus 24 par le signal de commande du conducteur 32. Une ou plusieurs données ont été écrites dans la mémoire selon ce procédé, le comparateur 25 indique au système 1 par l'intermédiaire du conducteur 26 et du registre d'état 29 que les deux pointeurs $PSt_1$ et $PSt_2$ ne sont plus égaux. Le registre 1 en déduit qu'il y a des données à lire dans la mémoire.

Le système 1 lit les données dans la mémoire 4 en utilisant les adresses du compteur $PSt_1$, en rien incrémenté à l'aide du signal d'horloge du système récepteur 1. Le signal de commande du conducteur 31 branche le bus 23 aux adresses de la mémoire durant la lecture.

Le système 1 lit toutes les données contenues dans la mémoire jusqu'à ce que le comparateur 25 lui indique par le registre d'état 29 qu'il y a égalité entre les deux pointeurs $PSt_1$ et $PSt_2$ et donc que la mémoire est vidée. Le compteur 11 a rattrapé le compteur 13.

Au cours du fonctionnement, les sorties du compteur $PSt_1$ et du registre FMT sont comparés en permanence par le comparateur 18 qui génère le signal $PSt_1 = FMT$. Il en est de même pour le compteur $PSt_2$ qui est comparé en permanence avec le registre FMT par le comparateur 21 qui génère le signal $PSt_2 = FMT$.

Si au cours du fonctionnement $PSt_1 = FMT$, la valeur DMT est rechargée dans le compteur $PSt_1$, les adresses de lecture du système 1 rebouclent en tête de la mémoire définie par son adresse d'extrémité.

De même, si $PSt_2 = FMT$, les adresses d'écriture du système 2 rebouclent indépendamment de celles du système 1, en tête de la mémoire 4.

Il peut arriver que le flot des données écrites par le système 2 dans la mémoire 4 soit telle que le compteur 13 rattrape le compteur 11. Il y a alors risque d'écrasement dès qu'il y a égalité $PSt_1 = PSt_2$ puisque le système 1 n'a pas eu le temps de lire les données contenues dans la mémoire.

Avantageusement, l'invention prévoit de bloquer l'écriture en mémoire par le système 2 lorsqu'il y a risque de débordement ou d'écrasement des données dans la mémoire. Par conséquent, comme représenté sur la Fig.4, les sorties des comparateurs 16 et 21 sont soumises à une opération logique ET dans les bascules 19 et 27, ce qui revient à constater que le compteur d'adresses 13 a un "tour d'avance " sur le compteur d'adresses 11 et donc qu'il y a risque de débordement.

Comme le montre la Fig.4, la bascule 19 est mise dans son état basculé par le comparateur 21 ($PSt_2$ = FMT) et rétablie dans son état initial par le comparateur 18 ( $PSt_1$ = FMT ). Si en outre les contenus des compteurs 11 et 13 deviennent égaux dans l'état basculé de la bascule 19, c'est-à-dire $PSt_1$ n'est pas encore égal à FMT, le système 2 a un tour d'avance sur le système 1 et dans ces conditions, un signal $\overline{DEB}$ est appliqué à la porte ET 14 qui bloque tout nouvel adressage de la mémoire par le compteur 13, tant que le comparateur 25 n'a pas constaté à nouveau l'égalité entre $PSt_1$ et $PSt_2$ qui indique alors que la mémoire tampon est complétement vidée par le système 1 ou qu'un signal de remise à zéro provenant du système 1 (conducteur 27a) soit appliqué à la bascule 27.

Dans l'exemple décrit ci-dessus, l'initialisation du fonctionnement du dispositif ainsi que le chargement des registres 9 et 16 sont effectués par le système 1 qui peut également gérer la circulation des données sur les divers bus du dispositif. Bien entendu, ces tâches peuvent également être assignées au système émetteur 2 par une adaptation adéquate.

On va décrire maintenant une application du dispositif suivant l'invention dans un terminal de télétexte permettant d'afficher sélectivement sur l'écran d'un tube cathodique (poste de télévision, par exemple), un certain nombre de magazines composées de pages de texte

10

qui sont relatives à des informations très diverses, telles que les prévisions météorologiques, les répertoires téléphoniques, des journaux d'actualités, les cotations en bourse, etc.

Un tel dispositif de traitement de télétexte dénommé " Antiope " a été décrit dans un article de la revue de Radio Diffusion-Télévision n° 40-1975 par Bernard Marti et Michel Mauduit et en ce qui concerne son architecture générale dans un article de la revue IEEE Volume CE-25 n°3 Juillet 1979 par P.Frandon et G. Chauvel.

Tel que décrit dans ce dernier article, le terminal ou dispositif d'affichage de télétexte peut recevoir ses informations d'entrée d'une ligne téléphonique ou bien d'un signal de télévision diffusé par un émetteur et comportant en plus de l'information analogique relative aux images construites de façon classiques, de l'information sous forme binaire placée sur le signal vidéo émis dans les espaces laissés libres par les standards classiques de télévision tels que SECAM, PAL, NTSC, etc.

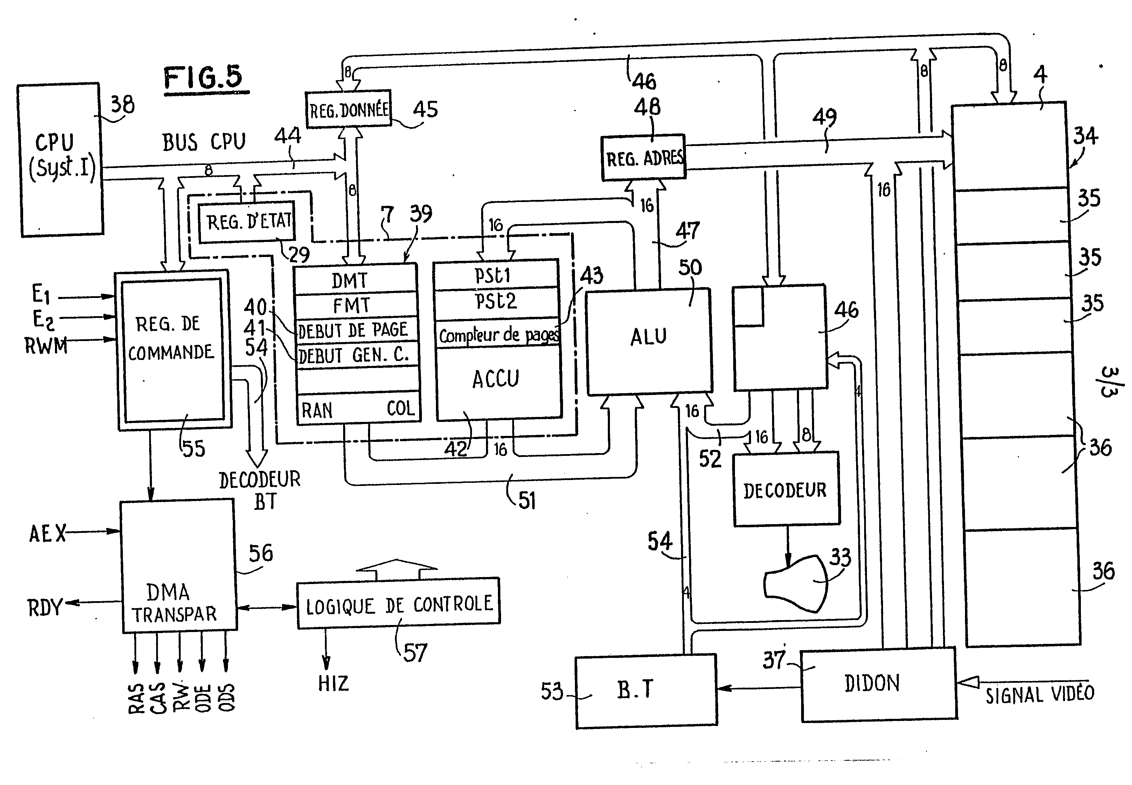

Le schéma représenté sur la Fig.5 concerne la partie du dispositif d'affichage de télétexte capable de séparer l'information binaire du signal vidéo émis et transformer cette information en des images affichées sur un écran d'un tube cathodique, ici schématisé en 33.

Le dispositif d'affichage de télétexte comporte une mémoire composite 34 dont les sections sont affectées au stockage de données de natures diverses. Tout d'abord, cette mémoire composite comporte une zone qui constitue la mémoire tampon 4 de la Fig.1. En outre, elle comporte plusieurs zones 35 affectées à l'emmagasinage de pages d'information devant être affichées, ces zones étant appelées mémoires de page et d'autres zones 36 affectées au stockage de l'information de caractères appelées générateurs de caractères. Ces dernières zones peuvent être du type mémoire morte tandis que les zones 35

11

sont des mémoires vives comme l'est naturellement la mémoire tampon 4.

Le signal télé transmis par l'émetteur comporte un certain nimbre de lignes qui transportent des paquets d'informations binaires.

Chaque paquet est composé d'un préfixe qui contient des salves de synchronisation pour la découpe du paquet en octet et un numéro de magazine que sélectionne l'utilisateur par son clavier faisant partie du CPU 38.

Les données qui suivent le préfixe contiennent les informations en language " Antiope " qui une fois décodées servent à composer une page sur l'écran du téléviseur. Il n'y a donc pas de relation directe avec les données reçues et ce qui doit être affiché sur l'écran.

Il convient donc pour permettre le traitement approprié des paquets de données contenant l'information de télétexte, de stocker temporairement les données dans une mémoire tampon qui, est dans le cas de la Fig.5, la mémoire tampon 4. Il convient de signaler que la transmission d'une série de paquets de données est relativement rapide puisqu'elle est réalisée pendant une partie seulement de la transmission d'une trame vidéo du canal de télévision ( 20 lignes par exemple de la zone habituellement non visualisée sur l'écran de télévision). On peut donc assimiler le circuit séparateur Didon 37 au système 2 du traitement d'information émetteur décrit ci-dessus à propos des Fig.1 à 4.

Dans le dispositif de la Fig.5, la gestion de l'ensemble des données provenant de la mémoire tampon 4 est assurée par une unité de traitement central 38 (CPU) et par ses organes périphériques associés. Cette unité 38 est chargée notamment de traiter la partie des paquets de données contenant les informations d'affichage proprement dites telles que les informations de caractères (sous forme du code connu ASCII) et les informations dites d'attribut qui sont relatives à la couleur, à la nature du fond de l'image, à la nature des éléments visualisés ( ces éléments peuvent être de nature typographique ou graphique) etc.

Le traitement de toutes ces informations est réalisé à un rythme relativement lent de sorte que l'on peut assimiler l'unité 38 et ses organes associés au système 1 de traitement de l'information décrit ci-dessus à propos des Fig.1 à 4.

Le circuit de contrôle 7 de ces Fig. est représenté essentiellement dans le cadre en pointillés de la Fig.5 et il assure la gestion du contenu de la mémoire tampon 4 de la manière décrite ci-dessus. Les registres DMT et FMT font partie d'une pile de registres 39 contenant également d'autres registres pour stocker des adresses relatives à d'autres zones de la mémoire composite 34. Par exemple, il est prévu un registre 40 d'adresse de début de page et un registre 41 d'adresse de début de générateur de caractères. Par ailleurs, il est prévu un accumulateur 42 qui comporte notamment les compteurs $PSt_1$ et $PSt_2$, 11 et 13 ainsi que d'autres compteurs tel qu'un compteur 43 des pages du magazine transmis.

La pile de registres 39 est reliée au réseau de bus de données 44 connecté à un registre de données 45 lui-même relié par le bus 46 à la mémoire 34, au séparateur Didon 37 et à un dispositif 46 de traitement des données typographiques et graphiques devant être affichées sur l'écran du tube 33. On trouve une description détaillée de ce dispositif dans la demande de brevet déposée ce jour au nom de la Demanderesse et intitulée : " Procédé et dispositif ...

13

L'accumulateur 42 est relié à un bus d'adresses 47 communiquant avec un registre d'adresses 48 qui est connecté à son tour à l'entrée d'adresses de la mémoire 34 par un bus 49.

Le registre d'état 29 est relié au bus 44 communiquant avec l'unité de traitement central 38.

Le dispositif d'affichage de télétexte comporte également une unité arithmétique et logique 50 chargée d'élaborer les adresses devant être envoyées à la mémoire 34 d'une part à partir de la pile de registres 39 et de l'accumulateur 42 par un bus 51 et d'autre part à partir du dispositif 46 de traitement de données typographiques et graphiques par un bus 52 sur lequel circulent les adresses en code ASCII des caractères stockés dans les générateurs de caractères 35 de la mémoire composite 34. L'unité arithmétique et logique a notamment pour rôle d'aiguiller les signaux d'horloge circulant sur les conducteurs 12 et 15 (Fig.2) vers les compteurs 11 et 13, respectivement.

Un circuit de base de temps 53 relié au dispositif séparateur Didon 37 et aux divers autres organes du dispositif d'affichage par des bus 54 assure la synchronisation de toutes les opérations.

Un registre de commande 55 assure la gestion des données circulant sur les bus pour les introduire dans les registres appropriés, tandis qu'un dispositif 56 d'accès direct à la mémoire de type transparent assure la gestion de l'accès à la mémoire 34 par les divers organes du dispositif d'affichage sans qu'il y ait interaction possible entre ces organes. On trouve une description détaillée d'un tel dispositif d'accès direct à la mémoire dans la demande de brevet déposée sous le n° 77 31 140 le 17 Octobre 1977 au nom de la Demanderesse et ayant pour titre " Dispositif d'accès direct à une mémoire associée à un microprocesseur ".

Le dispositif 56 d'accès direct à la mémoire est associé à une logique de commande 57.

14

## REVENDICATIONS

1. Procédé permettant l'échange d'information entre deux systèmes à vitesses de traitement d'information différentes, l'un des systèmes étant émetteur et l'autre récepteur, caractérisé en ce qu'il consiste à stocker successivement des groupes de données composant l'information envoyée par le système émetteur (2) dans une mémoire vive (4) sous la commande d'un premier pointeur d'adresses (6) capable d'adresser successivement toutes les positions de la mémoire à la vitesse du système émetteur (2), à extraire successivement les groupes d'information ainsi stockés de la mémoire (4) sous la commande d'un second pointeur d'adresses (5) capable également d'adresser successivement toutes les positions de la mémoire (4) à la vitesse du système récepteur (1), à comparer constamment les contenus des pointeurs (5,6) et à engendrer un signal ($PSt_1 = PSt_2$) en cas d'égalité de ces contenus pour avertir le système récepteur (1) que la mémoire (4) est vide.

2. Procédé suivant la revendication 1, caractérisé en ce qu'il consiste en outre à engendrer un signal ($PSt_2 = FMT$) lorsque le pointeur (6) associé au système émetteur (1) atteint l'adresse (FMT) de ladite mémoire (4) et à soumettre ce signal de fin de mémoire à une opération logique ET avec ledit signal d'égalité ($PSt_1 = PSt_2$) pour bloquer les informations provenant dudit système émetteur (2) et éviter l'écrasement des groupes de données non encore extraites de la mémoire par le système récepteur.

3. Procédé suivant la revendication 2, caractérisé en ce que ladite opération de blocage est maintenue jusqu'à ce que ledit système récepteur (1) ait vidé la mémoire (4) de son contenu et en ce qu'il consiste à cet effet à supprimer ladite condition ET lorsqu'un nouveau signal d'égalité ($PSt_1 = PSt_2$) entre les contenus desdits pointeurs (5,6) est engendré.

4. Procédé suivant l'une quelconque des revendications 1 à 3, caractérisé en ce qu'il consiste à commander la progression des adresses desdits pointeurs (5,6) par des signaux d'horloge provenant respectivement des systèmes émetteur et récepteur (1,2) associés.

5. Procédé suivant la revendication 4, prise en combinaison avec l'une quelconque des revendications 2 et 3, caractérisé en ce que ladite opération de blocage consiste à empêcher l'application des signaux d'horloge au pointeur (6) associé audit système émetteur (2).

6. Procédé suivant l'une quelconque des revendication 1 à 5, caractérisé en ce qu'il consiste à multiplexer dans le temps les adresses fournies par lesdits pointeurs à ladite mémoire vive.

7. Dispositif pour la mise en oeuvre du procédé suivant l'une quelconque des revendications 1 à 6 et destiné à permettre l'échange d'information entre deux systèmes de traitement d'information à vitesses de traitement différentes, l'un des systèmes étant émetteur et l'autre étant récepteur, caractérisé en ce qu'il comprend une mémoire vive (4), connectée par son entrée de données auxdits systèmes (1,2) et par son entrée d'adresses à deux pointeurs d'adresses (5,6) associés respectivement au système récepteur (1) et au système émetteur (2), et un circuit de contrôle (7) comportant un premier comparateur (25) relié entre les deux pointeurs (5,6) et audit système récepteur (1) pour signaler à celui-ci une égalité entre les contenus des deux pointeurs (5,6).

8. Dispositif suivant la revendication 7, caractérisé en ce que les deux pointeurs (5,6) sont des compteurs (11,13) reliés respectivement à des conducteurs d'horloge (12,15) des systèmes de traitement (1,2) associés pour être incrémentés au rythme de traitement de chacun d'entre eux.

9. Dispositif suivant la revendication 8, caractérisé en ce qu'il comprend en outre un premier re-

16

gistre (16) dans lequel est stocké l'adresse (FMT) de la dernière position de la mémoire tampon (4), en ce que ce premier registre (16) est relié à une entrée d'un second comparateur (21) lui-même connecté par son autre entrée au compteur d'adresse (13) du système émetteur (2) et en ce que la sortie de ce second comparateur (21) est reliée à un premier circuit ET (19,27) dont la sortie est reliée à un second circuit ET (14) auquel est appliqué également le signal d'horloge (conducteur 15) destiné à incrémenter le pointeur (6) du système émetteur (2), ledit second circuit ET bloquant le passage des signaux d'horloge lorsque le premier circuit ET fournit son signal de sortie signifiant un risque d'écrasement de l'information stockée dans ladite mémoire tampon (4).

10. Dispositif suivant la revendication 9, caractérisé en ce que ledit premier circuit ET comprend une première bascule (26) dont une première entrée est reliée audit second comparateur (21) et dont la seconde entrée est connectée à la sortie d'un troisième comparateur (18) dont les entrées sont reliées respectivement au pointeur (5) du système récepteur (1) et au premier registre (16) contenant l'adresse (FMT) de la dernière position de la mémoire tampon (4), ladite bascule étant ainsi placée dans son second état lorsque le pointeur (5) du système récepteur (1) atteint cette dernière position, et en ce que la sortie de ladite première bascule (26) est reliée à la première entrée d'une seconde bascule (27) ayant son autre entrée reliée à la sortie du premier comparateur (25), sa sortie étant connectée audit second circuit ET (14).

11. Dispositif suivant la revendication 10, caractérisé en ce que la sortie de la seconde bascule est reliée audit système récepteur (1) par l'intermédiaire d'un registre d'état (29) affecté à ce dernier.

12. Dispositif suivant l'une quelconque des revendications 7 à 11, caractérisé en ce qu'il comprend un second registre (9) connecté à l'un des systèmes (1,2) pour recevoir de ce dernier une adresse (DMT) de début de mémoire tampon, ce registre étant couplé également auxdits pointeurs (5,6) pour en début de fonctionnement placer ces pointeurs à la valeur de l'adresse de la première position de la mémoire tampon (4).

13. Dispositif suivant la revendication 12, caractérisé en ce que lesdits premier et second registres (9,16) sont reliés au système récepteur (1) pour être chargés de leurs adresses (DMT et FMT) respectives lors de l'initialisation du dispositif.

14. Dispositif suivant l'une quelconque des revendications 7 à 13, caractérisé en ce que lesdits pointeurs (5,6) sont reliés à la mémoire tampon (4) par un multiplexeur (30) pour permettre l'application d'adresses avec partage dans le temps à cette mémoire (4).

15. Application du dispositif suivant l'une quelconque des revendications 7 à 14, dans un dispositif d'affichage de télétexte équipé d'une unité centrale de traitement (38) formant ledit système récepteur et d'un dispositif séparateur (37) pour séparer d'un signal vidéo des informations binaires relatives au télétexte à afficher, ledit dispositif séparateur (37) étant ledit système émetteur ayant une vitesse de traitement des informations nettement supérieure à celle à laquelle ladite unité centrale traite les informations.

0054490

1/3

FIG.1

FIG.3

Cycle Syst.1

Lecture par Syst.1

Ecriture par Syst.2

Cycle Syst.2

FIG.4

Bascule 19

$PSt_2 = FMT$

$PSt_1 = FMT$

Comparateur 25

$PSt_1 = PSt_2$

$PSt_1 = PSt_2$

Conducteur 27

$\overline{DEB}$

FIG.2

FIG.5

0054490

Office européen
des brevets

**RAPPORT DE RECHERCHE EUROPEENNE**

Numéro de la demande

EP 81 40 1984

| Catégorie | Citation du document avec indication, en cas de besoin, des parties pertinentes | Revendication concernée | |
|---|---|---|---|
| | **DOCUMENTS CONSIDERES COMME PERTINENTS** | | **CLASSEMENT DE LA DEMANDE (Int. Cl. 3)** |
| X,Y | PROCEEDINGS OF THE 4th ANNUAL SYMPOSIUM ON COMPUTER ARCHITEC-TURE, 23-25 mars 1977, publié par IEEE NEW YORK (US) A.C. PARKER et al. "Hardware/ Software tradeoffs in a variable word width, variable queue length buffer memory", pages 159-164 <br><br> * page 161, colonne de droite, alinéas 1-4; page 162, colonne de droite, alinéa 1 et figures 1,6 * <br><br>-- | 1,2,3, 4,5, 7-9, 11-13, 15 | G 06 F 13/00 |
| X,Y | DE - A - 1 524 233 (TELEFUNKEN) <br><br> * page 6, alinéa 2 - page 10, alinéa 1; figure 1 * <br><br>-- | 1,2,3, 4,5, 7-10 | **DOMAINES TECHNIQUES RECHERCHES (Int. Cl. 3)** <br><br> G 06 F 13/00 |
| X,Y | WO - A - 80/02755 (BURROUGHS) <br><br> * page 4, ligne 13 - page 7, ligne 12; page 8, lignes 6-27; page 15, ligne 22 - page 16, ligne 26; page 17, lignes 23-26; figures 1,3,4 * <br><br>-- | 1,2,3, 4-8, 11-14 | |
| Y | EP - A - 0 005 488 (SIEMENS) <br><br> * page 4, ligne 22 - page 5, ligne 33; figure * <br><br>-- | 2,3, 10 | **CATEGORIE DES DOCUMENTS CITES** |
| Y | US - A - 3 952 289 (BALIGANT) <br><br> * colonne 11, ligne 60 - colonne 12, ligne 30 * <br><br>-- ./. | 2,3 | X: particulièrement pertinent à lui seul <br> Y: particulièrement pertinent en combinaison avec un autre document de la même catégorie <br> A: arrière-plan technologique <br> O: divulgation non-écrite <br> P: document intercalaire <br> T: théorie ou principe à la base de l'invention <br> E: document de brevet antérieur, mais publié à la date de dépôt ou après cette date <br> D: cité dans la demande <br> L: cité pour d'autres raisons <br><br> &: membre de la même famille, document correspondant |

Le présent rapport de recherche a été établi pour toutes les revendications

| Lieu de la recherche | Date d'achèvement de la recherche | Examinateur |
|---|---|---|
| La Haye | 11-03-1982 | DHEERE |

0054490

Numéro de la demande

**RAPPORT DE RECHERCHE EUROPEENNE**

Office européen
des brevets

EP 81 40 1984
-2-

| Catégorie | Citation du document avec indication, en cas de besoin, des parties pertinentes | Revendica-tion concernée | CLASSEMENT DE LA DEMANDE (Int. Cl. ³) |
|---|---|---|---|
| | **DOCUMENTS CONSIDERES COMME PERTINENTS** | | |
| Y | <u>FR - A - 2 388 351</u> (PHILIPS) | | |
| | * page 6, ligne 35 - page 9, ligne 17 * | 15 | |
| | | | |
| | | | **DOMAINES TECHNIQUES RECHERCHES (Int. Cl. ³)** |